# EUROPÄISCHE PATENTANMELDUNG

(11) **EP 2 090 755 A1**
(43) Veröffentlichungstag der Anmeldung: **19.08.2009**
(21) Anmeldenummer: 08151428.3
(22) Anmeldetag: 14.02.2008
(51) Int. Cl.: F01D 21/04, F02C 6/12, F01D 25/24

(54) **Turboladergehäuse**

(71) Anmelder: ABB Turbo Systems AG, 5400 Baden (CH)
(72) Erfinder: Oeschger, Daniel, 5085 Sulz (CH); Schellenberg, Peter, 5408 Ennetbaden (CH); Baechi, Rolf, 8154 Oberglatt (CH); Kästli, Daniel, 5452 Oberrohrdorf (CH); Joho, Marcel, 5103 Auenstein (CH)
(74) Vertreter: ABB Patent Attorneys

(57) **Zusammenfassung**

Eine Verdrehsicherung (30) im Bereich der Verbindung zwischen Verdichtergehäuse (10) und Lagergehäuse (20) behindert die Verdrehung des Verdichtergehäuses (10) zum Lagergehäuse (20).

## Beschreibung

### Technisches Gebiet

Die Erfindung bezieht sich auf das Gebiet der Strömungsmaschinen, insbesondere der Abgasturbolader für aufgeladene Brennkraftmaschinen. Sie betrifft ein Gehäuse eines solchen Abgasturboladers.

### Stand der Technik

Abgasturbolader werden zur Leistungssteigerung von Brennkraftmaschinen (Hubkolbenmotoren) eingesetzt. Ein Abgasturbolader besteht aus einer Abgasturbine im Abgasstrom der Brennkraftmaschine und einem Verdichter im Ansaugtrakt der Brennkraftmaschine. Das Turbinenrad der Abgasturbine wird vom Abgasstrom der Brennkraftmaschine in Rotation versetzt und treibt über eine Welle das Laufrad des Verdichters an. Der Verdichter erhöht den Druck im Ansaugtrakt der Brennkraftmaschine, so dass beim Ansaugen eine größere Menge Luft in die Brennkammern gelangt. Der Verdichter umfasst ein Verdichtergehäuse, welches in der Regel im radial äusseren Bereich mit langen Schrauben am Lagergehäuse befestigt ist. In Abgasturboladern mit Radialverdichter - axiale Anströmung und radiale Abströmung - ist aufgrund der hohen Umfangsgeschwindigkeit des rotierenden Verdichterrades im Gehäuse eine hohe kinetische Energie vorhanden. Mit den zunehmenden Anforderungen an Abgasturbolader hinsichtlich der Druckverhältnisse, ist auch die Gefahr des Berstens des Verdichterrades infolge immenser Fliehkräfte gestiegen. Damit weder Personen noch Sachwerte gefährdet werden, wird von den Betreibern der Brennkraftmaschinen oder den Behörden gefordert, dass im Fall des Berstens des Verdichterrades keine Trümmer mit ihrer grossen kinetischen Energie durch die das Rad umschliessenden Gehäuse nach aussen gelangen. Folglich müssen die Energien, des rotierenden Verdichterrades im Innenbereich des Turboladers mit geeigneten Massnahmen abgebaut werden, und die Gehäuseverbindungen zwischen dem Verdichtergehäuse und dem Lagergehäuse entsprechend ausgelegt sein.

Die Energie des geborstenen Verdichterrades wird gezielt an verschiedenen Stellen im Innern des Turboladers abgebaut. In der Anmeldung WO 02/090722 A1 ist eine Berstschutzvorrichtung für einen Radialverdichter eines Turboladers beschrieben, bei der das Verdichterrad von Gehäuseteilen umgeben ist, die in der Lage sind, die im Verdichterrad gespeicherte Energie aufzunehmen. Der axiale Impuls des Verdichterrad wird auf die Gehäuseteile übertragen und belastet die Schraubenverbindung zwischen dem Verdichtergehäuse und dem Lagergehäuse in axialer Richtung. Zusätzlich werden die Schrauben durch eine Verdrehung der beiden Gehäuse belastet. Die Verdrehung resultiert aus dem radialen Impuls, der vom Verdichterrad auf das Verdichtergehäuse übertragen wird.

### Kurze Darstellung der Erfindung

Die Aufgabe der vorliegenden Erfindung besteht darin, die Gehäuseverbindungen zwischen dem Verdichtergehäuse und dem Lagergehäuse dahingehend zu verbessern, dass sowohl axial wie auch im Umfangsrichtung wirkende Kräfte sicher aufgenommen werden können.

Erfindungsgemäss werden eine oder mehrere Verdrehsicherungen im Bereich der Verbindung zwischen Verdichtergehäuse und dem Lagergehäuse angeordnet. Die Verdrehsicherung behindert die Verdrehung des Verdichtergehäuses zum Lagergehäuse

Die Gestaltung dieser Verdrehsicherung kann sowohl mit einem zusätzlichen Element erfolgen (z.B. Schrauben, Stifte, Bolzen, Achsen, Wellen, Zapfen etc.) oder aber auch direkt über die Gestaltung der Flanschkontakte (z.B. Verzahnung der Kontaktflächen etc.) realisiert werden.

Somit kann eine Überlagerung von Biege- und Normalspannungen reduziert werden. Es ergeben sich dadurch für die Befestigungsmittel zur Aufnahme der axial wirkenden Kräfte geringere Belastungen in Umfangsrichtung.

### Kurze Beschreibung der Zeichnungen

Nachfolgend wird eine Ausführungsform der Erfindung anhand von Zeichnungen detailliert erläutert. Hierbei zeigt
- Fig. 1: das Verdichtergehäuse und das Lagergehäuse eines Abgasturboladers mit einer erfindungsgemässen Verdrehsicherung,
- Fig. 2: eine Detailansicht des Verbindungsbereichs zwischen den beiden Gehäusen nach Fig. 1 in verbundenem Zustand,
- Fig. 3: eine Detailansicht des Verbindungsbereichs zwischen den beiden Gehäusen nach Fig. 1 in getrenntem Zustand mit einer ersten Ausführungsform einer erfindungsgemässen Verdrehsicherung,
- Fig. 4: eine Detailansicht des Verbindungsbereichs zwischen den beiden Gehäusen nach Fig. 1 in verbundenem Zustand mit einer zweiten Ausführungsform einer erfindungsgemässen Verdrehsicherung,
- Fig. 5: eine Detailansicht des Verbindungsbereichs zwischen den beiden Gehäusen nach Fig. 1 in verbundenem Zustand mit einer dritten Ausführungsform einer erfindungsgemässen Verdrehsicherung, und
- Fig. 6: eine Detailansicht des Verbindungsbereichs zwischen den beiden Gehäusen nach Fig. 5 aus einer anderen Blickrichtung.

### Weg zur Ausführung der Erfindung

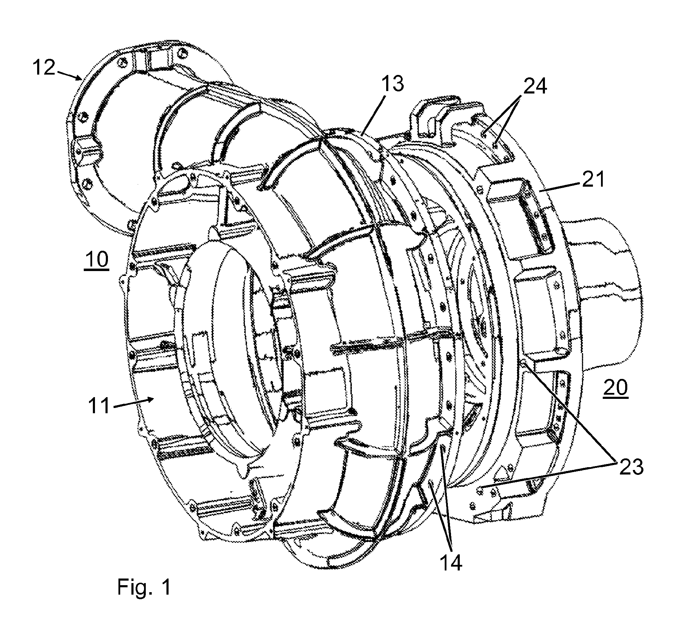

Fig. 1 zeigt die voneinander getrennten Verdichtergehäuse 10 und Lagergehäuse 20 eines Abgasturboladers. Das Verdichtergehäuse 10 führt die zu verdichtende Luft vom Lufteintritt 11 über das Verdichterrad und einen spiralförmigen Sammelraum zum Luftaustritt 12, von wo die Luft den Brennkammern der Brennkraftmaschine zugeführt wird. In dem Lagergehäuse 20 ist die Welle des Abgasturboladers drehbar gelagert. Zudem ist der Abgasturbolader in der Regel über das Lagergehäuse mit dem Untergrund verbunden, etwa mit einer an der Brennkraftmaschine befestigten Konsole.

Das Verdichtergehäuse ist im Bereich eines umlaufenden Befestigungsflansches 13 am Lagergehäuse befestigt.

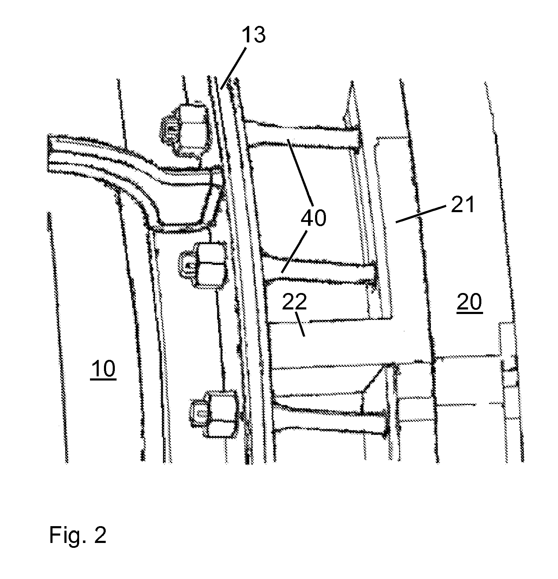

Zur Befestigung des Verdichtergehäuses 10 am Lagergehäuse 20 können mehrere, entlang dem Umfang verteilte Befestigungsmittel, insbesondere Befestigungsschrauben, verwendet werden. Diese Befestigungsschrauben sind durch Bohrungen 14 und 24 im Befestigungsflansch 13 des Verdichtergehäuses sowie im Befestigungsflansch 21 des Lagergehäuses 20 geführt. In Fig. 2 sind die Befestigungsmittel 40, in Form von mit Muttern gesicherten Stiften, dargestellt. Die Befestigungsmittel dienen der Aufnahme von Axialkräften, Kräften also, welche in axialer Richtung wirken.

Ebenfalls entlang dem Umfang verteilt sind erfindungsgemäss Verdrehsicherungen zwischen den beiden Befestigungsflanschen 13 und 21 angeordnet. Die Verdrehsicherungen dienen der Aufnahme von Umfangskräften, Kräften also, welche in Umfangsrichtung wirken.

Sind die beiden Befestigungsflansche, wie in der dargestellten Ausführungsform, in axialer Richtung beabstandet zueinander angeordnet, etwa um eine gewisse Mindestlänge für die Befestigungsmittel 40 zu erhalten, können zur Aufnahme der Verdrehsicherungen Vorsprünge 22 vorgesehen sein, welche die axiale Distanz zwischen den beiden Befestigungsflanschen 13 und 21 überbrücken. Diese Vorsprünge können auf der Lagergehäuseseite oder auf der Seite des Verdichtergehäuses angeordnet sein.

Als Verdrehsicherungen kommen verschiedene Mittel in Frage. Allen gemeinsam ist dabei, dass sie einen Formschluss in Umfangsrichtung zwischen dem Verdichtergehäuse und dem Lagergehäuse bewirken. Dies kann durch in dafür vorgesehene Bohrungen eingesetzte Schrauben, Stifte, Bolzen, Achsen, Wellen, Zapfen oder aber etwa durch eine Verzahnung der Kontaktflächen zwischen Verdichtergehäuse und Lagergehäuse erfolgen.

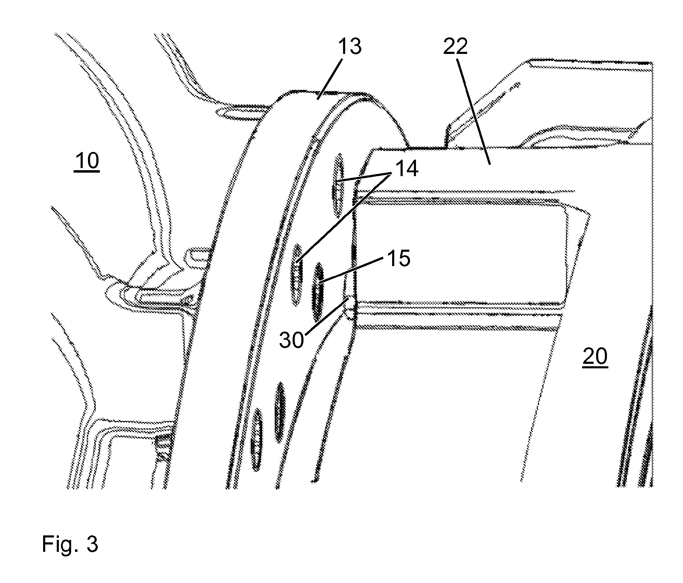

Die Verdrehsicherungen können dabei im Innern der Verbindung angeordnet sein, wie dies in der Ausführungsform gemäss Fig. 3 der Fall ist, bei welcher ein Stift als Verdrehsicherungsmittel 30 in die Bohrungen (24) und 15 im Lagergehäuse und dem Verdichtergehäuse eingesetzt ist.

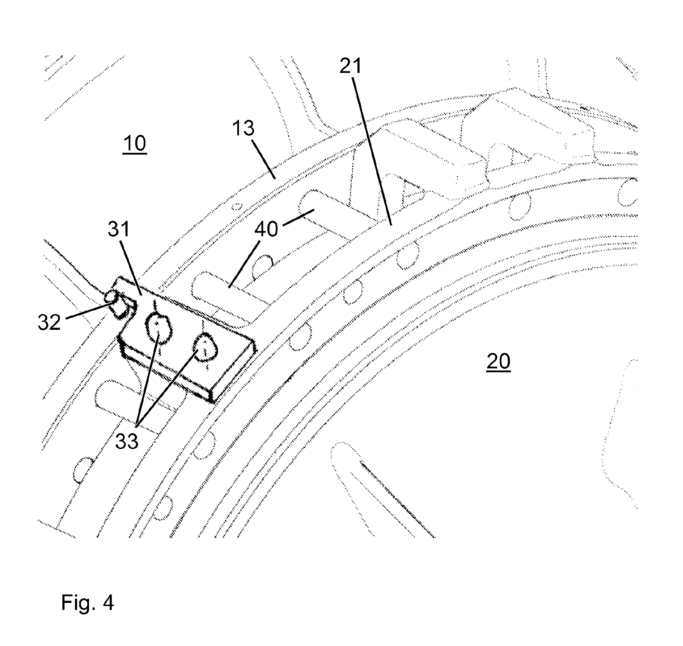

Alternativ können die Verdrehsicherungen auch von aussen aufgesetzt sein. In der Ausführungsform gemäss Fig. 4 umfasst die Verdrehsicherung ein radial auf das Lagergehäuse 20 aufgesetztes Verdrehsicherungsmittel 31 in Form eines länglichen Gehäuseelements, welches an einem aufgesetzten Vorsprung 32 bzw. in einer eingelassenen Vertiefung des Verdichtergehäuses in Umfangsrichtung aufliegt. Im Berstfall verhindert die Auflage in Umfangsrichtung eine Rotation des Verdichtergehäuses 10 bezüglich des Lagergehäuses 20. Natürlich kann das Verdrehsicherungsmittel 31 auch auf dem Verdichtergehäuse aufgeschraubt sein und am Lagergehäuse aufliegen.

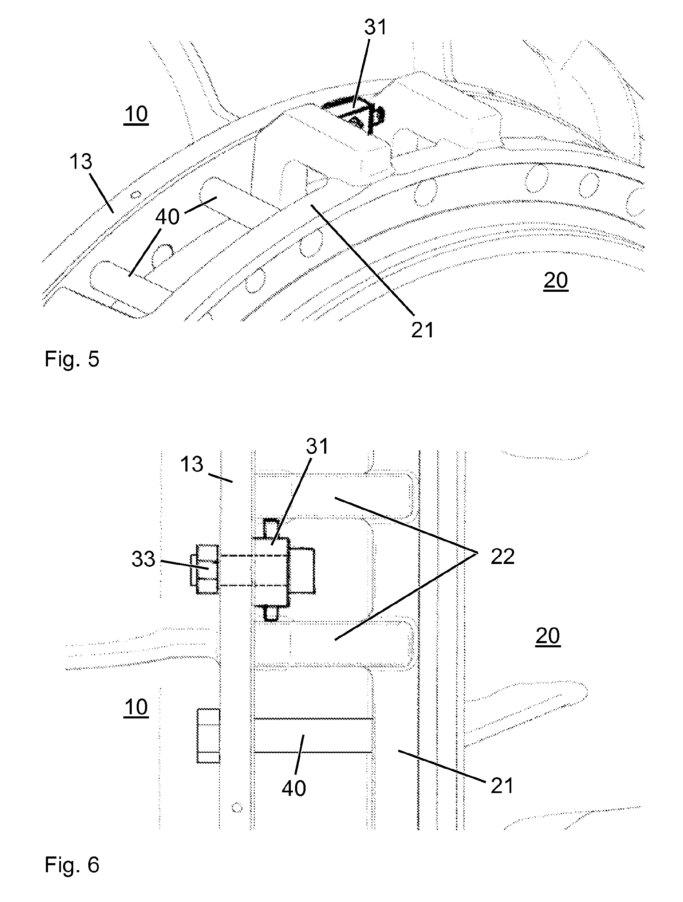

In einer weiteren Ausführungsform der erfindungsgemässen Verdrehsicherung wird gemäss Fig. 5 und 6 ein Verdrehsicherungsmittel 31 in Form eines Blockierelements zwischen zwei Gehäusevorsprüngen 22 am Lagergehäuse 20 eingesetzt. Das Blockierelement ist formschlüssig in Umfangsrichtung zwischen die beiden Gehäusevorsprünge eingepasst, um eine Rotation des Verdichtergehäuses 10 bezüglich des Lagergehäuses 20 zu verhindern. Zur axialen und radialen Fixierung werden Befestigungsmittel 33 in Form von Schrauben verwendet.

### Bezugszeichenliste

- 10: Verdichtergehäuse
- 11: Lufteintritt
- 12: Luftaustritt
- 13: Befestigungsflansch
- 14: Befestigungsbohrung
- 15: Verdrehsicherungsbohrung
- 20: Lagergehäuse
- 21: Befestigungsflansch
- 22: Gehäusevorsprung
- 23: Verdrehsicherungsbohrung
- 24: Befestigungsbohrung
- 30,31: Verdrehsicherungsmittel
- 32: Vorsprung
- 33: Befestigungsmittel
- 40: Befestigungsmittel

## Patentansprüche

1. Gehäuse eines Abgasturboladers, umfassend ein Verdichtergehäuse (10) und ein Lagergehäuse (20), wobei das Verdichtergehäuse (10) und das Lagergehäuse (20) in axialer Richtung aneinander befestigt sind, **dadurch gekennzeichnet, dass** zwischen dem Verdichtergehäuse (10) und dem Lagergehäuse (20) Verdrehsicherungsmittel (30, 31) angeordnet sind.

2. Gehäuse eines Abgasturboladers nach Anspruch 1, wobei das Verdichtergehäuse (10) und das Lagergehäuse (20) mittels Befestigungsmitteln (40) zur Aufnahme von Axialkräften verbunden sind, und zwischen dem Verdichtergehäuse (10) und dem Lagergehäuse (20) zusätzlich zu den Befestigungsmitteln (40) zur Aufnahme von Axialkräften Verdrehsicherungsmittel (30, 31) zur Aufnahme von Umfangskräften angeordnet sind.

3. Gehäuse eines Abgasturboladers nach Anspruch 2, wobei die Befestigungsmittel (40) und die Verdrehsicherungsmittel (30) auf gleicher radialer Höhe angeordnet sind.

4. Gehäuse eines Abgasturboladers nach Anspruch 2, wobei die Befestigungsmittel (40) und die Verdrehsicherungsmittel (30, 31) auf unterschiedlicher radialer Höhe angeordnet sind.

5. Gehäuse eines Abgasturboladers nach einem der Ansprüche 2 bis 4, wobei die Befestigungsmittel (40) einen axialen Abstand zwischen dem Verdichtergehäuse (10) und dem Lagergehäuse (20) überbrücken, wohingegen im Bereich der Verdrehsicherungsmittel (30) der axiale Abstand mittels eines Gehäusevorsprungs (22) überbrückt ist.

6. Gehäuse eines Abgasturboladers nach einem der Ansprüche 2 bis 5, wobei mindestens eines der folgenden Mittel für die Verdrehsicherung (30, 31) verwendet wird: Schraube, Stift, Bolzen, Achse, Welle, Zapfen oder formschlüssige Verbindung der Kontaktflächen zwischen dem Verdichtergehäuse (10) und dem Lagergehäuse (20).

7. Gehäuse eines Abgasturboladers nach einem der Ansprüche 2 bis 5, wobei die Mittel für die Verdrehsicherung (31) von radial aussen auf das Gehäuse aufgesetzt sind.

8. Abgasturbolader, umfassend Gehäuse nach einem der vorangehenden Ansprüche.
